# EUROPEAN PATENT SPECIFICATION

(11) **EP 0 331 570 B1**
(45) Date of publication and mention of the grant of the patent: **12.05.1993**
(21) Application number: 89400544.6
(22) Date of filing: 27.02.1989
(51) Int. Cl.: B62K 19/12, B62K 19/28

(54) **Frame for motorcycles**
Motorradrahmen
Cadre pour motocyclettes

(30) Priority: 27.02.1988 JP 24495/88
(43) Date of publication of application: 06.09.1989
(73) Proprietor: HONDA GIKEN KOGYO KABUSHIKI KAISHA, Minato-ku Tokyo (JP)
(72) Inventor: Ishii, Takanori, Shiki-shi Saitama (JP); Saito, Hiroshi, Tokyo (JP)
(74) Representative: Dubois-Chabert, Guy

(56) References cited:
- FR-A- 1 323 651
- FR-A- 1 367 704
- GB-A- 336 045
- GB-A- 381 334

## Description

### Industrial Field of Utilization

The present invention relates to a frame for motorcycles and, more particularly, to a frame that a head pipe and frame elements connected therewith are formed as a cast part split into two parts, right and left, in the direction of vehicle width, and said right and left split parts are assembled by combining into one body.

### Prior Art

Conventionally, it is known that a frame for motorcycles is obtainable by combining a split-type light alloy casting divided into two parts, right and left, for example a frame disclosed in Laid-Open Japanese Patent Application No. Sho 61-129383. The frame disclosed therein is of the constitution that a unitary cast part split into right and left parts is assembled by combining by a plurality of bolts in the head pipe portion, and bearings (commonly angular contact ball bearings) supporting a handlebar turning shaft are pressed into the upper and lower ends of the head pipe with the right and left parts butted.

Such a prior art frame for motorcycles, therefore, has a drawback that the bearing area of the head pipe has to be finished with a high dimensional accuracy after assembling the halves, and therefore it is a hard work to carry out a high-accuracy cutting operation of the head pipe section forming a part of a large frame, resulting in a high cost of production. Furthermore, it is necessary to increase the tightness of bolts in order to combine the right and left halves such that there will not occur stress concentration in the bearing area centering at split surfaces. To realize this, however, the number of the bolts must be increased or the adoption of large-diameter bolts is required, resulting in increased vehicle weight.

FR-A-1 367 704 describes a motorcycle frame according to the preamble of claim 1 and basically comprising two right and left split parts united by two annular members surrounding both halves of the head pipe in order to prevent a separation of the frame into the parts. However, it fails to mention that the annular members could be handlebar turning shaft bearing support members and also that at least one of them could comprise a bifurcated piece covering a part of said frame elements so as to increase the strength of the assembly.

### BRIEF DESCRIPTION OF THE DRAWINGS

Fig.1 is a perspective view of a major portion showing the assembled state of the vehicle frame in an embodiment thereof ;
Fig.2, 3 and 4 are sectional views showing the upper end section of a head pipe of the vehicle frame assembled as shown in Figs.1 ;
Fig.5 is a perspective view of a major portion showing the assembled state of the vehicle frame pertaining to another embodiment ; and
Fig.6 is a longitudinal sectional view of a major portion of the vehicle frame assembled as shown in Fig.5.

### PREFERRED EMBODIMENTS

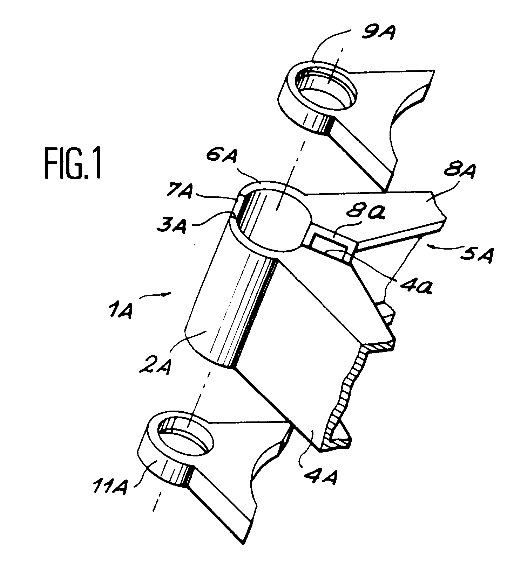

Fig.1 is a perspective view showing a major portion including left and right half parts 1A, 5A and upper and lower bearing support members 9A, 11A that constitute a vehicle frame of the configuration that a pair of right and left main frame elements 4A, 8A extend from the head pipe to the rear of the vehicle body. Either of the right and left half parts 1A, 5A is a monoblock casting produced of a light alloy (e.g., aluminum alloy). To the head pipe half 2A of the left half part 1A is connected the main frame element 4A of a channel material, while to the head pipe half 6A of the right half part 5A is connected the main frame element 8A of a channel material. The left half part 1A and the right half part 5A are joined by butt welding not only at the ends 3A, 7A of the head pipe halves 2A, 6A but at the ends 4a, 8a of the main frame elements 4A, 8A. The bearing support members 9A, 11A are triangular parts of bifurcated shape which cover not only the upper and lower ends of the head pipe but a part of the main frame elements 4A, 8A, their whole body being welded to the head pipe halves 2A, 6A.

This construction has the advantage that the assembly-type head pipe halves and the front part of the main frame elements 4A, 8A connected thereto are more effectively increased in strength and rigidity than those of an embodiment with a support member of purely annular shape. The bearing support members of this configuration may be installed only at either of the upper and lower ends of the pipe, and the other may be merely an annular part.

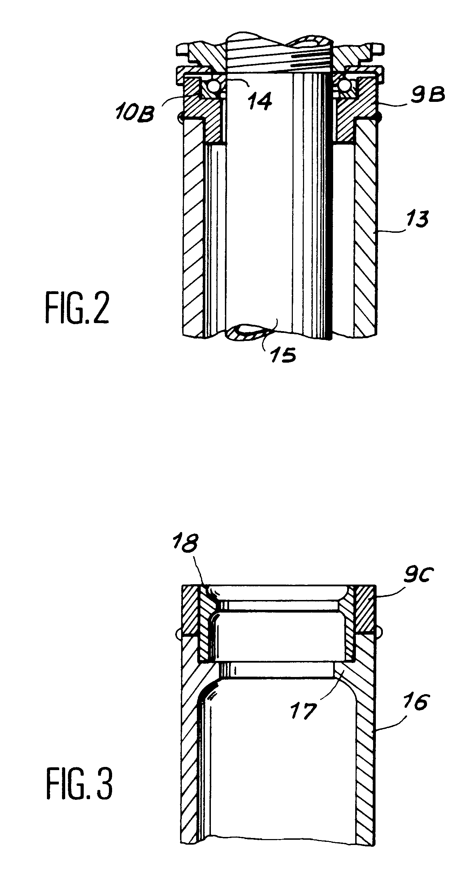

Fig.2 shows only the upper end portion of the head pipe 13 assembled by the procedure shown in Fig.1. At this upper end portion of the head pipe 13 is welded the annular bearing support member 9B and a bearing 14 pressed in its bearing mounting groove 10B supports the handlebar turning shaft 15. This example of modification features a small-diameter lower half part of the bearing support member 9B, which is fitted (lightly pressed) in the head pipe 13, and a greater strength and rigidity of the jointed section of the bearing support member in relation to the head pipe as compared with the example shown in Fig.1.

Fig.3 shows a projection 17 provided around the inside wall, near the upper end, of the head pipe 16 assembled by the method shown in Fig.1. The bearing support member 9C welded to the upper end of the head pipe 16 and the outer ring 18 of a bearing just pressed in the upper end section of the head pipe 16 are in contact with this projection 17. This construction has the advantage that the outer ring 18 increases the strength and rigidity of the joint section of the head pipe 16 and the bearing support member 9C.

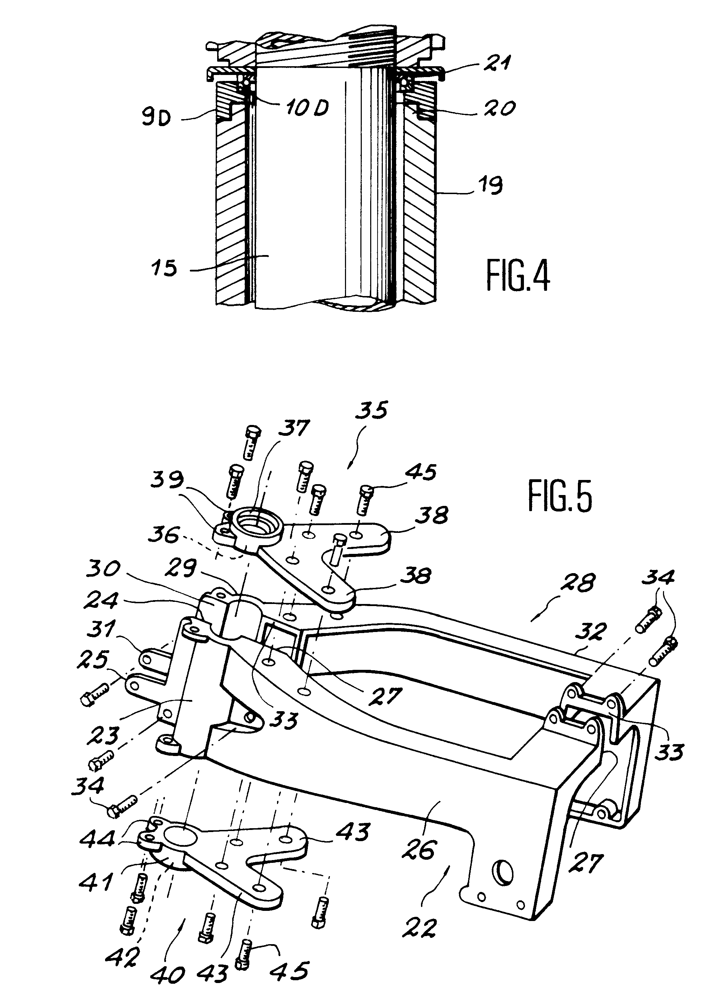

Fig.4 shows only the upper end section of the head pipe assembled by the method shown in Fig.1. At the upper end of the head pipe 19 a small-diameter section 20 reduced in diameter in steps is formed. On the outside of this small-diameter section 20, the annular bearing support member 9D is press-fitted (pressing of the small-diameter section 20 into the bearing support member 9D). (In addition, the bearing support member 7D and the head pipe 19 may be welded as shown in Fig.2). And the handlebar turning shaft 15 is supported on the bearing 21 pressed in the bearing mounting groove 10D of the bearing support member 9D. A feature of this modification lies in that the head pipe 19 consisting of the right and left split parts is unitized firmly by the bearing support member 9D fitted on the small-diameter portion 20, and that because the great rigidity of the head pipe 19 can be maintained simply by combining the bearing support member 9D, the welding of the right and left halves of the head pipe 19 portion may be omitted, and also in the case of the frame disclosed in Laid-Open Japanese Patent Application n°. Sho 61-129383 in which the right and left split parts are assembled by bolts, the bolts in the head pipe section may be omitted.

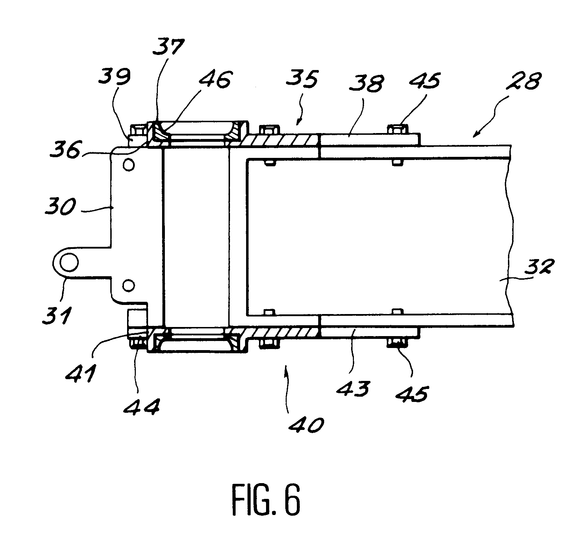

The examples shown if Fig.5 and 6 differ from those of the embodiments described above, and are of such a type that the right and left halves of the frame are assembled into one body by bolts.

A left half part 22 and a right half part 28 are monoblock cast parts either produced of a light alloy (e.g., aluminum alloy). A head pipe half 23 of the left half part 22 is connected with a main frame element 26 of channel material, while a head pipe half 29 of the right half part 28 is connected to a main frame element 32 of channel material. The left half part 22 and the right half part 28 are butt-jointed at the ends 24, 30 of the head pipe halves 23, 29, at the ends 27, 33 of the main frame elements 26, 32 and at fairing support lugs 25, 31 protecting from the head pipe halves 23, 29, and fastened into one body by a plurality of tightening bolts 34. Bearing support members 35, 40 comprise annular sections 36, 41 having bearing mounting grooves 37, 42, bifurcated branches 38, 43, and lugs 39, 44, each being so shaped as to cover not only the upper and lower ends of the head pipe thus assembled but also a part of the main frame elements 26, 32, and fastened by a plurality of tightening bolts 45 to the head pipe halves 23, 29 (in fig 6, numeral 46 denotes the outer ring of a bearing).

The adoption of such a construction has the advantage that loads exerted to the tightening bolts in use for the combination of the right and left head pipe halves 23, 29 sections can be reduced by the bearing support members 35, 40 and in addition the head pipe thus assembled and its vicinity can be increased in strength and rigidity by the bearing support members 35, 40. Furthermore, the adoption of the above-described construction insures firmer tightening of the split frame (the right and left half parts 22, 28), requires no high dimensional accuracy control, excellent workability, and the reduction of production costs because of improved productivity.

### Effects of Invention

As is obvious from the description given above, the present invention is capable of insuring the reduction of loads exerted to the joint section of the head pipe halves by mounting the bearing support members. And the assembled head pipe and its vicinity are increased in strength and rigidity by the bearing support members and the relationship of this mounting. When the right and left split members of vehicle frame are combined by the use of bolts, the number of bolts for combining the head pipe and its vicinity can be decreased, or the diameter of bolts can be made smaller, thereby reducing the weight of the vehicle frame. In the construction of the frame having the bearing support members mounted to the right and left head pipe halves which are cast parts, no high dimensional accuracy control is required of the head pipe halves as compared with the frame using no bearing support members and, furthermore, machining of cast parts can readily be performed, thus enabling the lowering of production costs due to improved productivity.

## Claims

1. A frame motorcycles wherein a head pipe (1A, 5A, 23, 29) and frame elements connected therewith are formed as a cast part split into two parts (2A, 6A, 22, 26), right and left, in the direction of vehicle width, and ran be assembled by combining said right and left rigth parts, support member (9A, 9B, 9C, 11A, 35, 40) comprising an annular part (36, 41) are fixedly mounted at the upper and lower ends of said head pipe astride a portion belonging to each of said right and left split parts so as to withstand, in this relation of mounting, a separating force acting on said right and left split parts, characterised in that the support members are handlebar shaft bearing support members and at least one of the support members comprises a bifurcated piece (38 and 38, 43 and 43) covering a portion of said frame elements.

2. A frame for motorcycles as claimed in claim 1, wherein said bifurcated pieces are installed by screw threads (45) onto said right and left split parts, thereby securing said upper and lower support members at the upper and lower ends of said head pipe.

3. A frame for motorcycles as claimed in claim 1, wherein the upper and lower annular members are welded, together with the bifurcated pieces, to said right and left split parts.

## Patentansprüche

1. Motorradrahmen, bei dem ein Kopfrohr (1A, 5A, 23, 29) und damit verbundene Rahmenteile als Gutteil geformt sind, das in Richtung der Fahrzeugbreite in zwei Teile (2A, 6A, 22, 26) geteilt ist und durch Zusammensetzen des rechten und des linken Teils montiert werden kann, wobei Stützelemente (9A, 9B, 9C, 11A, 35, 40), die einen Ringteil (36, 41) umfassen, auf einem Abschnitt sitzend, der zu jedem der rechten und linken geteilten Teile gehört, fest am oberen und unteren Ende des Kopfrohres angebracht sind, so daß sie in dieser Montageanordnung einer Trennkraft, die auf die rechten und linken geteilten Teile wirkt, widerstehen, dadurch gekennzeichnet, daß die Stützelemente Lenkerwellenlager-Stützelemente sind und wenigstens eines der Stützglieder ein Gabelstück (38 und 38, 43 und 43) umfaßt, das einen Abschnitt der Rahmenteile bedeckt.

2. Motorradrahmen nach Anspruch 1, wobei die Gabelstücke mittels Schraubgewinde (45) auf den rechten und linken geteilten Teilen montiert werden, wodurch die oberen und unteren Stützelemente an den oberen und unteren Enden des Kopfrohres befestigt werden.

3. Motorradrahmen nach Anspruch 1, wobei die oberen und unteren Ringelemente zusammen mit den Gabelstücken an den rechten und linken geteilten Teilen angeschweißt sind.

## Revendications

1. Cadre pour motocyclette dans lequel le tube de fourche (1A, 5A, 23, 29) et les éléments du cadre qui sont connectés avec lui sont fabriqués sous forme d'une pièce de fonderie divisée en deux parties (2A, 6A, 22, 26), de droite et de gauche, dans le sens de la largeur du véhicule et peuvent être assemblés en combinant la partie de droite et la partie de gauche, dans lequel des éléments supports (9A, 9B, 9C, 11A, 35, 40), comprenant une pièce annulaire (36, 41), sont montés de façon fixe à l'extrémité supérieure et à l'extrémité inférieure dudit tube de fourche, à cheval sur une portion appartenant à chacune desdites parties divisées, de droite et de gauche, de façon à résister, dans cette relation de montage, à une force séparatrice agissant sur lesdites parties divisées,de droite et de gauche, cadre caractérisé par le fait que les éléments supports sont des éléments supports portant un roulement de l'axe du guidon et par le fait qu'au moins l'un des éléments supports est constitué d'une pièce bifurquée (38 et 38, 43 et 43) couvrant une portion desdits éléments du cadre.

2. Cadre pour motocyclette comme revendiqué dans la revendication 1, dans lequel lesdites pièces bifurquées sont installées sur lesdites parties divisées, de droite et de gauche,au moyen de vis (45), fixant ainsi lesdits éléments supports, supérieur et inférieur, aux extrémités supérieure et inférieure dudit tube de fourche.

3. Cadre pour motocyclette comme revendiqué dans la revendication 1, dans lequel lesdits éléments annulaires supérieur et inférieur sont soudés, en même temps que les pièces bifurquées, auxdites pièces divisées,de droite et de gauche.
